**Europäisches Patentamt**

**European Patent Office**

**Office européen des brevets**

(19)

(11) Numéro de publication: **0 053 550**
**A1**

## (12) DEMANDE DE BREVET EUROPEEN

(21) Numéro de dépôt: **81401872.7**

(51) Int. Cl.³: **G 06 K 7/016**, G 06 K 7/14

(22) Date de dépôt: **25.11.81**

(30) Priorité: **28.11.80 FR 8026029**

(43) Date de publication de la demande: **09.06.82**
**Bulletin 82/23**

(84) Etats contractants désignés: **AT BE CH DE FR GB IT LI LU NL SE**

(71) Demandeur: **INTERROLL S.A.R.L., Rue de l'Oze, F-21150 Les Laumes (FR)**

(72) Inventeur: **Collorec, René, 99, Boulevard de Vitré, F-35000 Rennes (FR)**
Inventeur: **Lemarechal, Hubert, 7, Square des Hautes Chalais, F-35100 Rennes (FR)**
Inventeur: **Le Pichon, Jean-Pierre, 16, Avenue du Maillé, F-35690 Acigné (FR)**
Inventeur: **Ollivier, René, La Petite Saudrais Fouillard, F-35340 Liffré (FR)**
Inventeur: **Quero, Jean-Claude, 73, Boulevard de Sévigné, F-35000 Rennes (FR)**

(74) Mandataire: **Le Guen, Louis François, 13, rue Emile Bara BP 91, F-35802 Dinard Cedex (FR)**

(54) **Dispositif de lecture optique d'étiquettes à combinaisons codées de barres.**

(57) Le dispositif sert à la lecture optique d'étiquettes (38) portant une pluralité de combinaisons codées de barres étroites et larges. L'étiquette (38) défile devant un système optique (40) qui projette son image sur une barrette d'éléments photosensibles (37). La barrette est lue à la fréquence d'une horloge de lecture (LEC) et délivre un signal analogique (SL) d'un niveau haut quand un élément photosensible lu est illuminé par l'image d'une barre et d'un niveau bas dans le cas contraire.

Il comprend encore un circuit de reconnaissance de largeur de barre (41) qui reçoit le signal (SL) et délivre un premier signal (ST) pour chaque barre lue et un second signal (SN) pour chaque barre large lue, un circuit d'interface (42) qui reçoit les signaux SN et ST, ainsi que les signaux d'horloge LEC. Le circuit d'interface (42) traite les signaux (SN) pour les grouper par combinaison, et un microprocesseur (43) commande, après chaque lecture de la barrette (37), les transferts des combinaisons du circuit d'interface dans ses mémoires, puis, à la fin du passage d'une étiquette, traite le contenu de ses mémoires de chiffres pour délivrer le numéro de l'étiquette (38).

Dispositif de lecture optique d'étiquettes
à combinaisons codées de barres

La présente invention concerne un dispositif de lecture optique d'étiquettes portant une pluralité de combinaisons codées de barres imprimées étroites et larges, séparées par des bandes d'aspect différent, l'étiquette défilant devant un système optique qui projette l'image de l'étiquette sur une barrette d'éléments photosensibles, les images des barres étant sensiblement perpendiculaires à la barrette, laquelle est lue longitudinalement cycliquement à la fréquence d'une horloge de lecture et délivre un signal analogique d'un niveau haut (ou bas) quand l'élément photosensible en cours de lecture est illuminé par l'image d'une barre et d'un niveau bas (ou haut) quand il est illuminé par une bande. Le dispositif a été développé par la demanderesse avec le concours du Laboratoire des systèmes électroniques de l'Université de Rennes, France.

Les étiquettes portant des barres d'une couleur séparées par des bandes d'une autre couleur sont utilisées sur des produits pour identifier ces derniers et permettre un tri automatique de ceux-ci parmi d'autres produits. L'utilisation de telles étiquettes entraîne l'utilisation de lecteurs optiques capables de les lire, c'est à dire de restituer l'information codée au moyen des barres. Plus particulièrement, dans certaines de ces étiquettes, on utilise des barres qui

0053550

peuvent avoir deux largeurs. Les barres forment des groupes de cinq barres dont deux sont larges et les trois autres étroites, si on utilise un code deux parmi cinq. Les groupes de cinq barres sont encadrés par deux groupes, par exemple de trois barres chacun, dont la composition est connue. Ces groupes d'encadrement sont appelés groupe de début et groupe de fin d'étiquette.

En pratique, dans un lecteur d'étiquettes de ce type, on projette l'image de l'étiquette sur une barrette de dispositifs sensibles à la lumière et orientée perpendiculairement aux images des barres et on déplace l'étiquette dans une direction parallèle à celle de ses barres. Les signaux électriques délivrés par la barrette en réponse à la lumière que ces composants reçoivent sont lus plusieurs fois au cours du passage de l'étiquette devant l'optique du lecteur.

Dans la pratique, dans le fonctionnement du lecteur, on rencontre plusieurs difficultés. Les étiquettes sont en général collées manuellement sur les produits, si bien que leurs orientations ne sont qu'approximatives. Certaines étiquettes sont renversées, c'est à dire que les groupes de début et de fin sont dans des positions inverses. Par ailleurs, au cours des manipulations des produits, certaines étiquettes sont mutilées par des éraflures, des traits de crayon, etc. Pour ces raisons, peu de lecteurs actuellement sur le marché sont fiables.

A titre d'exemples de dispositifs de lecture d'étiquettes, on peut citer ceux qui sont décrits dans les brevets US 4 147 295, 4 146 782, 3 838 251 et 3 886 521. Dans tous ces dispositifs, on mesure les largeurs des barres, ainsi que celles des bandes séparant les barres. Ces dispositifs comprennent des circuits de seuil adaptatif pour décider si une barre ou une bande est large ou étroite. Les résultats obtenus à la sortie des organes de décision sont directement utilisés. Ces dispositifs ne conviennent pas à la lecture des étiquettes à code deux parmi cinq mentionnées plus haut et, en outre, souffrent des défauts déjà mentionnés ci-dessus. Ainsi, dans le brevet US 4 147 295, il y a plusieurs rangées de barres codées les unes au-dessous des autres, les informations changeant d'une rangée à la suivante. Il en résulte que l'orientation de la carte ou étiquette est imposée dans des limites très strictes pour éviter une lecture chevauchée de deux rangées et chaque rangée n'est lue qu'une fois. Dans les brevets US 4 146 782, 3 838 251 et 3 886 521, l'organe de lecture est manuel, si bien que l'opérateur lisant l'étiquette à l'aide de cet organe peut corriger de mauvaises orientations et voit si elle est mutilée, ce qui n'est pas possible avec un dispositif à lecture automatique.

Un objet de la présente invention consiste à prévoir un dispositif de lecture optique ou lecteur d'étiquettes capable de lire des étiquettes même mal orientées, même mutilées, au moins jusqu'à un certain point au-delà duquel l'étiquette est déclarée illisible.

Suivant une caractéristique de l'invention, il est prévu un dispositif de lecture optique d'étiquettes, tels que défini dansl'introduction, qui comprend encore un circuit de reconnaissance de largeur de barre qui reçoit le signal analogique et délivre un premier signal pour chaque barre lue et un second signal pour chaque barre large lue, un circuit d'interface qui reçoit les premiers et seconds signaux, ainsi que les signaux d'horloge de lecture, le circuit d'interface traitant les seconds signaux pour les grouper par combinaison, et un microprocesseur commandant, après chaque lecture de la barrette, les transferts des combinaisons du circuit d'interface dans ses mémoires, puis, à la fin du passage d'une étiquette, traitant le contenu de ses mémoires de chiffres pour délivrer le numéro de l'étiquette.

Suivant une autre caractéristique, le circuit de reconnaissance de largeur de barree comprend une horloge d'échantillonnage, une première porte ET dont une entrée reçoit le signal analogique, dont la seconde entrée est reliée à la sortie de l'horloge d'échantillonnage et dont la sortie est reliée à l'entrée d'un premier compteur BCD, la sortie du premier compteur DCB étant reliée à un convertisseur DCB-décimal dont la sortie est reliée à une première mémoire, une seconde porte ET dont la première entrée reçoit le signal d'horloge de lecture, dont la seconde entrée reçoit le signal d'horloge d'échantillonnage et dont la sortie est reliée à l'entrée de commande de lecture de la première mémoire, la sortie sérielle de données de la première mémoire étant reliée à un circuit logique délivrant un signal à la seconde série de "1" lue dans ladite première mémoire, un second compteur DCB dont l'entrée est reliée à la sortie de la seconde porte ET, un registre mémoire DCB dont les entrées de données sont reliées aux sorties dudit second compteur DCB et dont l'entrée

d'écriture est reliée à la sortie dudit circuit logique, un comparateur dont les premières entrées sont reliées aux sorties du premier compteur DCB et dont les secondes entrées sont reliées aux sorties dudit registre mémoire DCB, la sortie du comparateur délivrant un signal quand la valeur numérique appliquée à ses premières entrées est supérieure à la valeur numérique appliquée à ses secondes entrées et étant reliée à une première bascule délivrant le second signal à chaque passage niveau haut à niveau bas, une seconde bascule délivrant le premier signal à chaque passage niveau haut à niveau bas, un détecteur de passage niveau haut à niveau bas dont la sortie est reliée aux entrées de remise à zéro des premier et second compteurs DCB.

Suivant une autre caractéristique, le circuit d'interface comprend un premier registre à décalage dont l'entrée d'horloge est reliée à la sortie d'une première porte OU dont une entrée reçoit le premier signal et dont la seconde entrée est reliée à la sortie d'une horloge de transfert, l'entrée de données dudit premier registre à décalage recevant le second signal, un second registre à décalage dont l'entrée d'horloge est reliée à la sortie d'une seconde porte OU dont la première entrée est reliée à la sortie de l'horloge de transfert et dont la seconde entrée reçoit un signal de commande de transfert du microprocesseur, un circuit de test du nombre des données inscrites dans la premier registre à décalage dont une sortie est reliée à l'entrée d'autorisation de transfert du microprocesseur, la sortie de données du second registre à décalage étant reliée à l'entrée de données du microprocesseur, l'entrée de remise à zéro du premier registre à décalage recevant le signal d'horloge de lecture.

Les caractéristiques de l'invention mentionnées ci-dessus, ainsi que d'autres, apparaîtront plus clairement à la lecture de la description d'un exemple de réalisation, ladite description étant faite en relation avec les dessins joints, parmi lesquels:

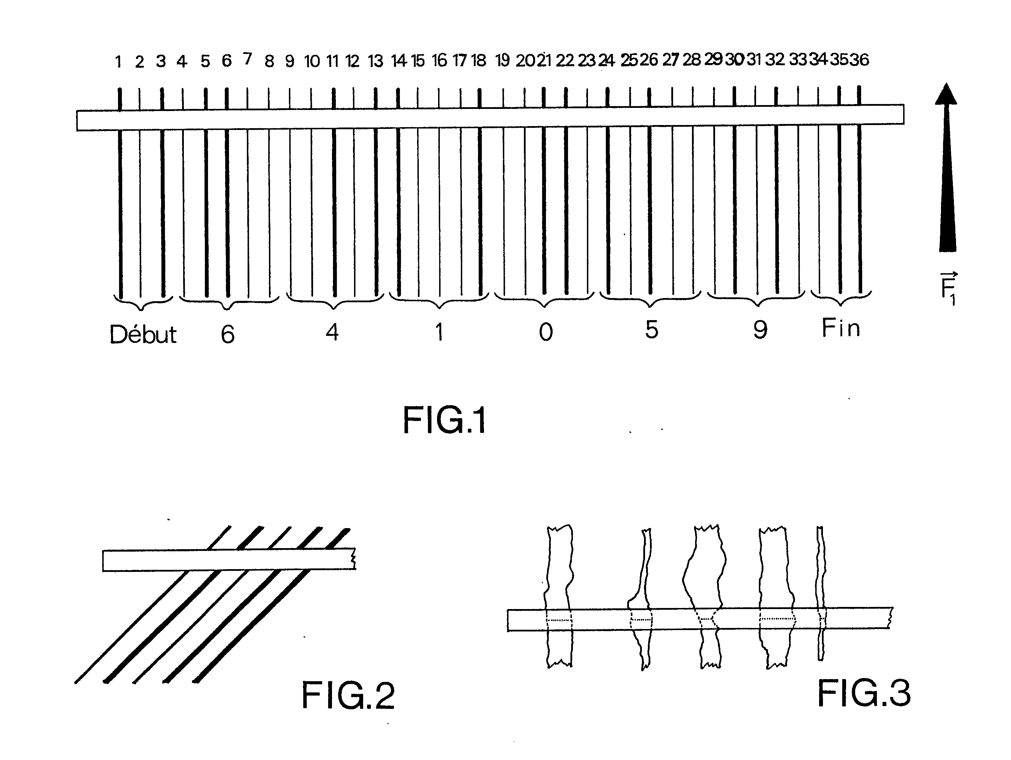

: la Fig. 1 est une vue schématique d'une étiquette à lire,

la Fig. 2 est une vue schématique illustrant le cas où une étiquette se présente de travers devant le lecteur,

la Fig. 3 est une vue schématique, à plus grande échelle, illustrant des défauts d'épaisseur de barres d'une étiquette,

la Fig. 4 est un bloc-diagramme du lecteur suivant l'invention,

la Fig. 5 est un schéma du circuit de calcul des largeurs de barres du lecteur de la Fig. 4,

la Fig. 6 est un diagramme illustrant le fonctionnement du circuit de la Fig. 5,

la Fig. 7 est un diagramme illustrant le choix du seuil dans le circuit de la Fig. 5,

la Fig. 8 est un schéma de l'interface du lecteur de la Fig. 4,

la Fig. 9 est un schéma simplifié du microprocesseur du lecteur de la Fig. 4, et

la Fig. 10 est un organigramme du programme de traitement du contenu de la mémoire du microprocesseur.

A la Fig. 1, on a représenté schématiquement une étiquette composée de 36 barres parallèles, numérotées de 1 à 36. La longueur des barres peut, dans la réalité, être de l'ordre de 4 cm et la distance entre la barre 1 et la barre 36 peut être de l'ordre de 6 cm. A la Fig. 1, on a, pour des raisons évidentes de clarté du dessin, dilaté la distance entre les barres 1 et 36, tandis que la longueur des barres est représentée pratiquement à l'échelle. L'étiquette est éclairée et un dispositif optique fait apparaître son image dans un plan image. Quand l'étiquette est déplacée dans le sens de la flèche F1, l'image de l'étiquette se déplace dans le plan image devant une barrette de dispositifs photosensibles ou photosensors 37. La barrette 37 est théoriquement orientée perpendiculairement aux images des barres et a une longueur supérieure à la distance entre les images des barres 1 et 36. En pratique, le dispositif optique est un objectif à focale variable permettant d'ajuster la largeur de l'image à la longueur de la barrette. A la Fig. 1, on a fait abstraction du dispositif optique.

Les barres de l'étiquette peuvent avoir deux valeurs d'épaisseur qui peuvent, avec les dimensions d'étiquette mentionnées ci-dessus, être de 1 mm pour les barres épaisses et de 0,5 mm pour les barres fines. La distance entre les lignes médianes des barres est de l'ordre de 1,6 mm.

Dans les 36 barres de l'étiquette, on distingue un premier groupe de trois barres, puis six groupes de cinq barres et, enfin, un dernier groupe de trois barres. Le premier groupe de trois barres définit le code de début de lecture et le dernier groupe de trois barres le code de fin de lecture. Ces deux codes peuvent être distincts ou identiques, mais ne doivent surtout pas présenter une structure symétrique, dans le cas où il est prévu de lire des étiquettes dont le sens n'est pas prédéterminé. Chaque groupe de cinq barres représente en code "deux parmi cinq", c'est à dire que, sur les cinq barres du groupe, deux barres sont épaisses et trois barres sont minces. A la Fig. 1, on a indiqué, pour les six groupes, les valeurs des chiffres correspondant, c'est à dire 6, 4, 1, 0, 5, 9 ce qui donne le numéro 641059 comme identification de l'étiquette.

La barrette 37 est, par exemple, une barrette connue sous le nom de circuit "CCD121H" commercialisé par la société américaine FAIRCHILD. Cette barrette se compose de 1728 éléments sensibles, ce qui correspond, dans le plan objet, à 28 éléments pour 1 mm et 14 éléments pour 0,5 mm. La série des éléments de la barrette est lue, de gauche à droite dans l'exemple montré, et la barrette délivre un signal V1, quand les éléments sont éclairés, et un signal V2 dans le cas contraire. Donc, pour les éléments qui sont en face des barres, la barrette délivre un signal V1 tandis que pour ceux qui sont en face des intervalles entre les barres ou au-delà des barres 1 et 36, elle délivre un signal V2. Les lectures de la barrette sont périodiques et chaque lecture est déclenchée par un signal LEC émis par une horloge. Comme on le verra dans la suite, les signaux V1 sont ensuite échantillonnés.

La vitesse de déplacement de l'étiquette et la fréquence de lecture sont telles que, pendant que l'étiquette défile devant le dispositif optique, plusieurs lectures sont effectuées. Par exemple, pour une vitesse de 0,5 m/s, on a, avec une période de lecture de 1,7 ms, environ 46 lectures pour une étiquette.

Dans des conditions parfaites, illustrées à la Fig. 1, il n'y a aucune difficulté à distinguer les barres épaisses des barres fines. En effet, à la lecture, les premières engendrent une suite ininterrompue de n échantillons "1" et les secondes une suite ininterrompue de n/2 échantillons "1". Bien entendu n dépend de la fréquence de l'horloge d'échantillonnage. On peut donc définir un seuil correspondant par exemple à une suite de n "1" qui permet d'attribuer aux suites inférieures la valeur 0 identifiant une barre fine et aux suites supérieures la valeur 1 identifiant une barre épaisse.

Dans la réalité, on rencontre des difficultés. Par exemple, comme le montre la Fig. 2, l'étiquette n'est pas présentée droite, c'est à dire que son image n'est pas perpendiculaire à la barrette. C'est le cas quand l'étiquette a été collée de travers ou que le produit qui la porte est présenté obliquement. Visiblement dans ce cas, à une barre fine correspond plus de n/2 échantillons "1" et à une barre épaisse plus de $\underline{n}$ échantillons "1". Donc, la valeur du seuil que l'on a mentionnée ci-dessus peut ne plus convenir. Il faut donc avant d'identifier un $\underline{1}$ ou un $\underline{0}$ évaluer le seuil. A la Fig. 3, on a montré le cas où les traits d'encre ou de peinture constituant les barres ont bavé. L'épaisseur de chaque barre n'est pas constante. On conçoit que, dans des cas extrêmes, pour une lecture de la barrette, une barre fine est vue large ou inversement. On comprend donc que plusieurs lectures sont nécessaires par étiquette.

Le dispositif de lecture optique suivant l'invention a pour objet de résoudre ces problèmes.

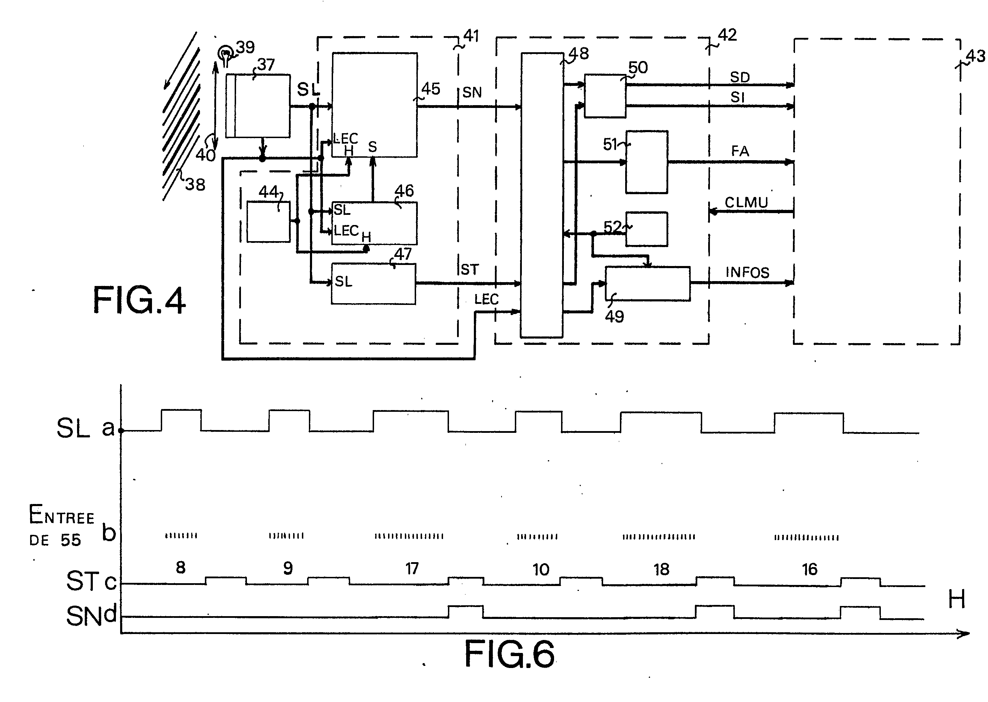

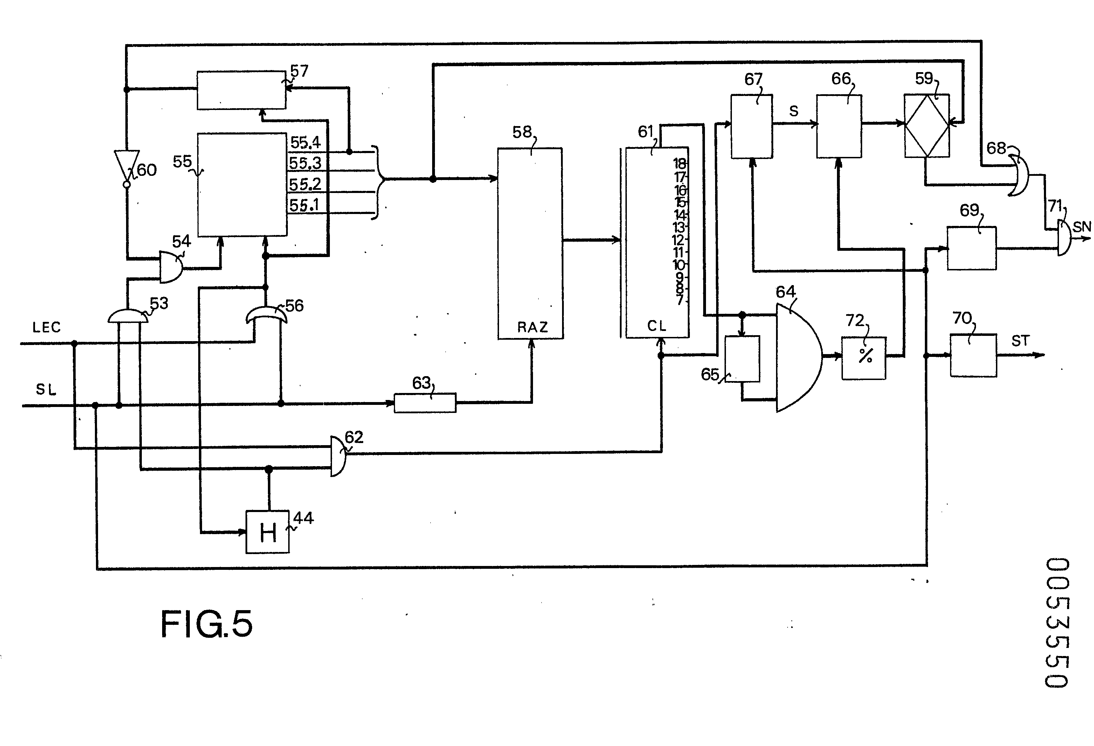

A la Fig. 4, on a schématiquement représenté une étiquette 38 éclairée par une lampe 39 et se déplaçant, suivant la flèche F1, devant un objectif 40 qui en projette l'image sur la barrette 37. La barrette 37 a une sortie de signal SL reliée à une entrée d'un circuit de reconnaissance de largeur de barre 41 qui comporte deux sorties SN et ST qui sont respectivement reliées aux entrées correspondantes d'un circuit d'interface 42. La barrette 37 a également une sortie LEC indiquant le début de chaque lecture qu'elle effectue, la sortie LEC étant respectivement reliée aux entrées correspondantes de 41 et 42. Le circuit 42 a, en plus de l'entrée LEC, quatre sorties SD, SI, FA, INFOS et une entrée CLMU reliées aux entrées et à la sortie correspondantes d'un microprocesseur 43. De plus, il est prévu une horloge 44.

Le circuit de reconnaissance de largeur de barre 41 comprend un circuit de comparaison 45, un circuit de calcul de seuil 46 et un circuit de synchronisation 47. Le circuit d'interface 42 comprend un circuit d'enregistrement de lecture 48, un registre tampon 49, un circuit de reconnaissance de début et de fin d'étiquette 50, un circuit de détection d'absence d'étiquette 51 et un circuit de commutation de signaux d'horloge 52.

A la Fig. 5, le fil SL, qui transmet le signal V1, est relié à la première entrée d'une porte ET 53 dont la sortie est reliée à la

8 0053550

première entrée d'une porte ET 54. La sortie de la porte 54 est reliée à l'entrée de signal d'un compteur 55 dont les sorties 55.1 à 55.4 affichent le nombre compté en code DCB. La sortie de l'horloge d'échantillonnage 44 est reliée à la seconde entrée de la porte 53.

Le fil LEC est relié à une entrée d'une porte OU 56 dont la seconde entrée est reliée au fil SL et dont la sortie est reliée à l'entrée RAZ (Remise A Zéro) du compteur 55, ainsi qu'à l'entrée RAZ d'une bascule 57 et à l'entrée de déclenchement de l'horloge 44. Il faut comprendre que les entrées de remise à zéro de 55 et 57 ne sont activées que par le front avant des signaux LEC et SL.

Les sorties 55.1 à 55.4 sont reliées aux entrées correspondantes d'un convertisseur DCB-décimal 58 ainsi qu'à la première entrée d'un comparateur 59. La sortie de poids fort 55.4 est, de plus, reliée à l'entrée de signal de la bascule 57 dont la sortie est reliée, par l'intermédiaire d'un inverseur 60, à la seconde entrée de la porte 54.

Le convertisseur 58 a sa sortie reliée à l'entrée d'une mémoire 61. Le fil LEC et la sortie de l'horloge 44 sont également respectivement reliées aux entrées d'une porte ET 62 dont la sortie est reliée à l'entrée de lecture de la mémoire 61. Le fil LEC est encore relié à l'entrée d'un circuit 63 de détection de front arrière dont la sortie est reliée à l'entrée RAZ du convertisseur 58.

La mémoire 61 est constituée par un registre à décalage dont les entrées parallèles sont reliées aux sorties du convertisseur 58. La sortie série de la mémoire 61 est reliée, d'une part, directement à une entrée d'une porte ET 64 et, d'autre part, à la seconde entrée de la porte 64 par l'intermédiaire d'un circuit à retard 65. Le circuit à retard 65 apporte un retard égal à la période de l'horloge 44. La sortie de la porte 64 est reliée à un diviseur par deux 72 dont la sortie est reliée à l'entrée d'écriture d'un registre mémoire 66. Par ailleurs, la sortie de la porte 62 est encore reliée à l'entrée de signal d'un compteur 67 dont les sorties affichant le nombre compté en code DCB sont reliées à l'entrée de données d'une mémoire 66. Les sorties de données de la mémoire 66 sont reliées aux secondes entrées du comparateur 59. L'entrée de remise à zéro du compteur 67 est reliée au fil LEC et est activée par le front avant du signal LEC.

La sortie du comparateur 59 est reliée à une entrée d'une porte OU 68 dont la seconde entrée est reliée à la sortie de la bascule 57.

Le fil SL est encore relié aux entrées de deux bascules monostables 69 et 70. La sortie de la bascule 69 est reliée à la première entrée d'une porte ET 71 dont la seconde entrée est reliée à la sortie de la porte 68 et dont la sortie est reliée au fil SN. La sortie de la bascule 70 est reliée au fil ST.

Comme on l'a mentionné plus haut, à chaque lecture de la barrette 37, celle-ci transmet sur le fil SL une série de signaux V1, comme par exemple ceux qui sont représentés par la courbe (a) de la Fig. 6. Pendant chaque signal V1, la porte 53 est ouverte et laisse passer les impulsions de l'horloge 44 vers le compteur 55, par la porte 54. Celle-ci est ouverte, car entre deux signaux V1, la bascule 57 est au repos ce qui se traduit par un "1" à la sortie de l'inverseur 60. Avant la fin du premier signal V1 de la courbe (a), huit impulsions d'horloge sont passées dans le compteur 55. Celui-ci affiche, en permanence, le chiffre qu'il contient sur ses sorties 55.1 à 55.4. Donc ce chiffre DCB est, en permanence, converti en chiffre décimal dans le convertisseur 58. A la fin du signal V1, le circuit 63 transmet un signal correspondant à 58 qui transmet alors le dernier chiffre converti, c'est à dire ici le chiffre "8", à la mémoire 61 qui marque sa borne "8". Par ailleurs, à la fin du signal V1, le compteur 55 et la bascule 57 sont mis à zéro par la porte 56.

D'autre part, on va supposer qu'une valeur de seuil était déjà enregistrée dans le registre 66, soit par exemple la valeur "16". Donc, le chiffre "8" affiché sur les sorties de 55 et appliqué aux premières entrées du comparateur 59 est inférieur au chiffre appliqué par 66 aux secondes entrées de 59. Il en résulte que la sortie de 59 reste à "0". La porte 68 n'est pas ouverte.

Enfin, le front arrière du signal SL déclenche le monostable 70 qui délivre un signal ST de durée bien déterminée.

A la barre suivante, c'est à dire au second signal V1 de la courbe (a), le fonctionnement est pratiquement le même, sauf que la mémoire marque cette fois sa borne "9".

A la barre suivante, c'est à dire au troisième signal V1 de la courbe (a), le fonctionnement est le même, sauf que la mémoire 61 marque sa borne "17" et que le chiffre affiché par 55 et appliqué à 59 devient supérieur à "16". Donc, la porte OU 68 laisse passer un "1" vers la porte 71 dont la seconde entrée est à "1" un certain temps après la fin de V1. Donc, un signal "1" dont la durée est déterminée par 69 est transmis sur SN.

Les courbes (b) à (d) de la Fig. 6 représentent les impulsions d'horloge entrant dans le compteur 55 à chaque barre, le signal ST et le signal SN, transmis par les fils du même nom. Il apparaît que le signal ST est produit à chaque barre et que le signal SN est égal à 1 pour chaque barre épaisse. On notera que les signaux ST et SN sont engendrés par les fronts arrières des signaux V1.

Au cours d'une lecture de la barrette 37, on a, en principe, trente six barres. La mémoire 61 a donc marqué certaines de ses bornes, normalement cinq à six bornes correspondants aux barres fines, soit par exemple les bornes "7" à "11", et le même nombre de bornes correspondant aux barres épaisses, soit par exemple les bornes "16" à "22". Dans la lecture, plusieurs barres ont normalement donné le même affichage sur 55, mais il n'en résulte qu'une seule borne marquée dans 61.

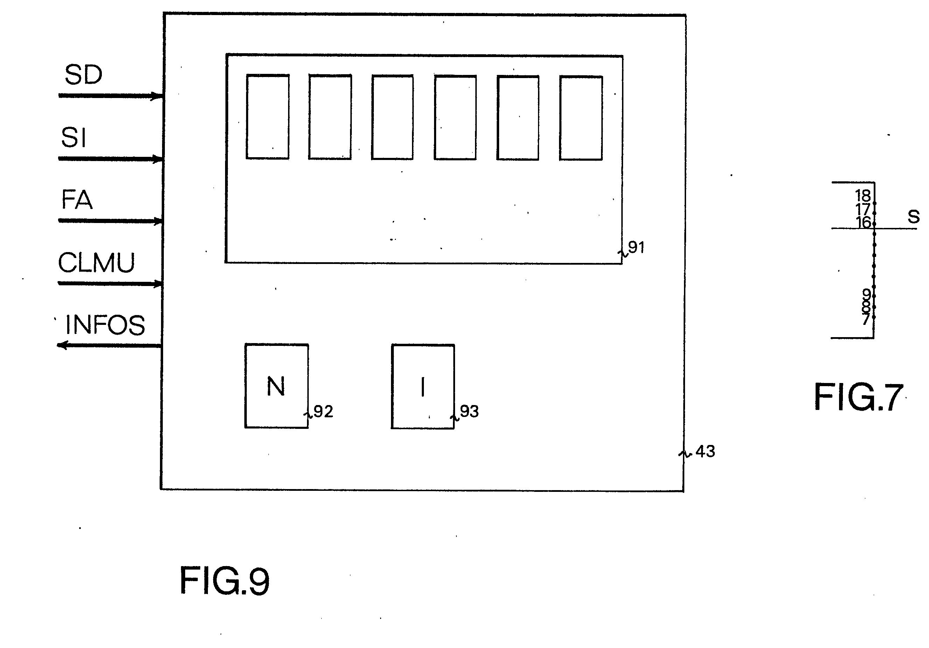

Au début de la nouvelle lecture de la barrette 37, le signal met, par son front avant, à zéro le compteur 67, puis ouvre la porte 62 de manière que les impulsions de l'horloge 44 soient appliquées au registre 61 et au compteur 67. Le registre 61 est lu en série et transmet une suite de signaux à la porte 64, dont ceux qui correspondent aux cellules marquées, comme l'illustre la Fig. 7, sont des "1" et les autres des "0". La suite transmise a l'allure suivante: 00000011111000011111111000000. Comme le retard apporté par 65 est d'une période d'horloge, la porte 64 ne transmet un signal qu'au 8ème signal reçu et ce jusqu'au 11ème, puis la sortie de 64 revient à "0". Le retard apporté par 65 permet aussi d'éliminer un "0" isolé parmi un groupe de "1" dans le cas où la suite transmise aurait, par exemple, l'allure suivante: 00000011011000010101111000000. A partir du 17ème signal, la porte 64 redevient passante. Le diviseur 72 délivre un signal au second passage à "1" de la sortie de la porte 64 et ce signal déclenche d'écriture dans le registre 66 du contenu actuel du compteur 67. Sans précaution, ce nombre serait évidemment égal à "17". En pratique, on supprime dans la mémoire 61, un certain nombre des premières cellules, par exemple deux, si bien que la suite transmise est la suivante 000011111000... Il en résulte que le compteur 67 ne marque de "15" quand le diviseur 65 délivre son signal d'écriture à 66. La nouvelle valeur "15" est donc écrite dans le registre 66 et va donc servir de nouvelle valeur de seuil pour la nouvelle lecture.

La durée du signal LEC est suffisante pour vider la mémoire 61. Par ailleurs, le signal LEC remet à zéro les circuits 55 et 57, par son front arrière.

Quand la sortie 55.4 de 55 change d'état, la bascule 57 change également d'état. Cela correspond à une durée de signal V1 très longue. La sortie de 57 force un signal "1" à la sortie de 71, par 68, et d'autre part, ferme la porte 54, par 60, si bien que le compteur 55 ne revient pas à zéro à l'impulsion d'horloge suivante. Ainsi, la valeur maximale affichée par 55 est préservée et le convertisseur 58 transmet bien cette valeur maximale à 61.

On notera qu'au début du passage d'une étiquette, à la première lecture, la valeur du seuil n'est pas établie. Donc, à la première lecture, pour chaque barre, on a un signal SN. On verra, dans la suite, comment le résultat de cette lecture est éliminé. On notera également que le seuil calculé au cours d'une lecture sert à la lecture suivante. On a ainsi un seuil adaptatif.

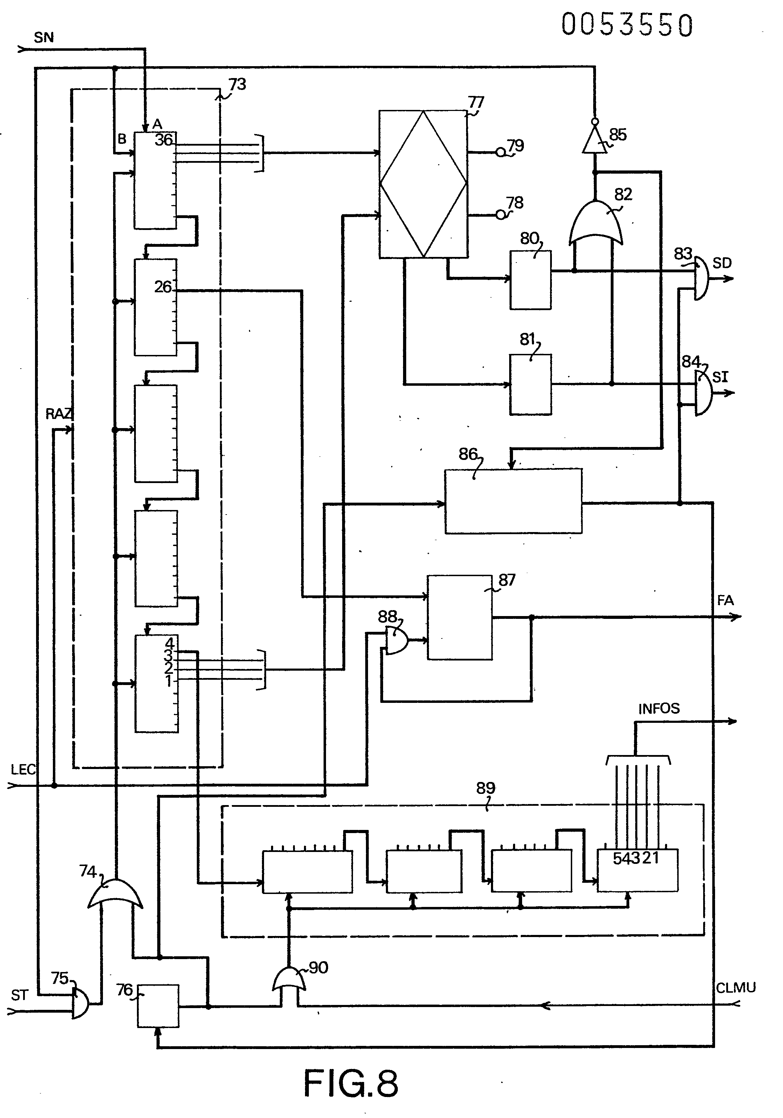

A la Fig. 8, le fil SN est relié à l'entrée sérielle de données A d'un registre à décalage 73 dont l'entrée d'horloge est reliée à la sortie d'une porte OU 74. Le fil ST est relié à une entrée d'une porte ET 75 dont la sortie est reliée à une entrée de la porte OU 74. L'autre entrée de la porte 74 est reliée à la sortie d'une horloge 76. De plus, le fil LEC est relié aux entrées RAZ du registre 73. Dans la pratique, comme le représente la Fig. 8, le registre 73 est composé de six modules en série et comprend trente six cellules actives et, donc, trente six sorties parallèles. Les sorties parallèles 1 à 36 correspondent aux numéros des barres de l'étiquette de la Fig. 1.

Parmi les trente six sorties, les sorties 1 à 3, d'une part, et 34 à 36, d'autre part, sont respectivement reliées aux premières entrées correspondantes d'un comparateur 77. Aux secondes entrées 78 et 79, sont respectivement appliqués les codes de début et de fin d'étiquette, soit dans le cas particulier le code 101 et 011. Le comparateur 77 comporte deux sorties qui sont respectivement reliées aux entrées de deux bascules 80 et 81 dont les sorties sont reliées, d'une part, aux entrées d'une porte OU 82 et, d'autre part, respectivement aux premières entrées de deux portes ET 83 et 84. La sortie de la porte OU 82 est reliée, par l'intermédiaire d'un inverseur 85, d'une part, à la seconde entrée de la porte 75, d'autre part, à l'entrée B du registre 73 et, enfin directement à l'entrée d'initialisation d'un compteur 86. Les entrées A et B du registre 73 sont en pratique les entrées d'une porte ET intégrée au registre et dont la sortie est reliée à l'entrée sérielle de celui-ci. La sortie du compteur 86 est reliée, d'une part, aux secondes entrées des portes 83 et 84, et, d'autre part, à l'entrée de déclenchement de l'horloge 76. L'entrée de signal du compteur 86 est reliée à la sortie de l'horloge 76. Le compteur 86 a une capacité de comptage de trente impulsions de l'horloge 76.

La sortie de rang 26 du registre 73 est reliée à l'entrée RAZ d'un compteur 87 dont l'entrée de signal est reliée à la sortie d'une porte ET 88. Une entrée de la porte ET 88 est reliée au fil LEC et la seconde à la sortie du compteur 87, laquelle est encore reliée à l'entrée FA correspondante du microprocesseur 43.

La sortie "4" du registre 73 est reliée à l'entrée de données d'un registre à décalage 89 dont les sorties "1" à "5" sont reliées à la liaison INFOS vers le microprocesseur 43 et dont l'entrée d'horloge est reliée à la sortie d'une porte OU 90. Une entrée de la porte OU 90 est reliée à la sortie de l'horloge 76 et l'autre à la liaison d'horloge CLMU provenant du microprocesseur.

A chaque nouvelle lecture de la barrette 23, le fil LEC remet à zéro le registre 73 et incrémente le compteur 87. L'horloge 76 est au repos. L'entrée d'horloge du registre 73 reçoit les signaux ST, par 75 ouverte par 85, et 74. Donc les signaux SN entrent dans le registre 73 où ils se trouvent sucessivement décalés jusqu'à ce que les 36 signaux SN correspondant aux trente six barres occupent les cellules 1 à 36 du registre. A noter que normalement le signal ST ne comprend que trente six impulsions par lecture.

Les signaux SN étant entrés dans 73, le comparateur 77 est en mesure de comparer, d'une part, le contenu des cellules 1 à 3 avec les signaux de 78 et, d'autre part, le contenu des cellules 34 à 36 avec les signaux de 79, puis l'inverse. En effet, une étiquette peut se présenter dans le sens normal, où le code de début se reconnaît dans les cellules 1 à 3 et celui de fin dans les cellules 34 à 36, ou dans le sens inverse. Or, le dispositif est prévu pour lire également les étiquettes dans le sens inverse. Quand il y a coïncidence dans le sens direct, le comparateur 77 délivre un signal vers la bascule 80 et, quand il y a coïncidence dans le sens inverse, il délivre un signal vers la bascule 81. Dès qu'un signal est présent à la sortie de 80 ou de 81, la porte 82 et l'inverseur 85 bloque la porte 75, ce qui évite à d'éventuels parasites sur le fil ST de troubler le fonctionnement. Par ailleurs, par l'entrée B du registre 73, on interdit toute entrée série résultant de l'environnement géographique de l'étiquette. Enfin, la sortie de 82 initialise le compteur 86 qui déclenche l'horloge 76. Les impulsions de l'horloge 76 sont transmises au registre 73 par la porte 74 et au registre 89 par la porte 90. Il en résulte un transfert des trente informations significatives du registre 73, c'est à dire situées entre les cellules 4 et 33 incluses, vers les trente cellules de 89. A la 30ème impulsion de 76, le compteur 86 l'inhibe.

Par ailleurs, dès que le compteur 86 a terminé de compter, il ouvre les portes 83 et 84, dont l'une transmet au microprocesseur l'information sur le sens normal ou inverse de présentation de l'étiquette.

Un instant plus tard, le microprocesseur 43 ouvre ses entrées INFOS correspondant aux cellules 1 à 5 de 89, qui, en fait, contiennent le code du premier chiffre de l'étiquette, il vérifie que le code "deux parmi cinq" est bien respecté, puis il fait transférer ces données dans une zone de sa mémoire 91 réservée au premier chiffre et, enfin, il transmet cinq impulsions sur le fil CLMU pour décaler cinq informations dans le registre 89. Ce cycle de fonctionnement du microprocesseur est repris pour le deuxième chiffre et ainsi de suite jusqu'au sixième.

Dans le cas où le code "deux parmi cinq" n'est pas reconnu, le chiffre correspondant, ou la lecture complète peut être rejeté, le microprocesseur n'enregistrant pas les données. Il en est évidemment de même si les codes de début ou de fin n'ont pas été reconnus, dans un sens ou dans l'autre.

Le compteur 87 sert à enregistrer le nombre d'impulsions LEC, donc de lectures effectuées par la barrette. Le compteur 87 est remis à zéro par chaque passage d'un "1" dans la cellule "26" du registre 73. A la fin d'une étiquette, il n'y a plus de passages de "1" si bien que le compte enregistré par 87 augmente jusqu'à atteindre la valeur prédéterminée pour laquelle sa sortie délivre le signal FA. Le signal FA indique au microprocesseur qu'il peut commencer à traiter les contenus de ses mémoires. Par ailleurs, la sortie FA, qui est supposée passée de "1" à "0", de 87 ferme la porte 88 si bien que le compteur 87 est bloqué.

Au début de l'étiquette suivante, on a de nouveau des passages de "1" dans la cellule "26", si bien que 87 est remis à zéro. Le signal FA disparaît ce qui déclenche dans le microprocesseur le début d'un nouveau cycle de traitement. Le choix de la cellule "26" dans le registre 73 est arbitraire, mais a donné de bons résultats au cours des expérimentations effectuées.

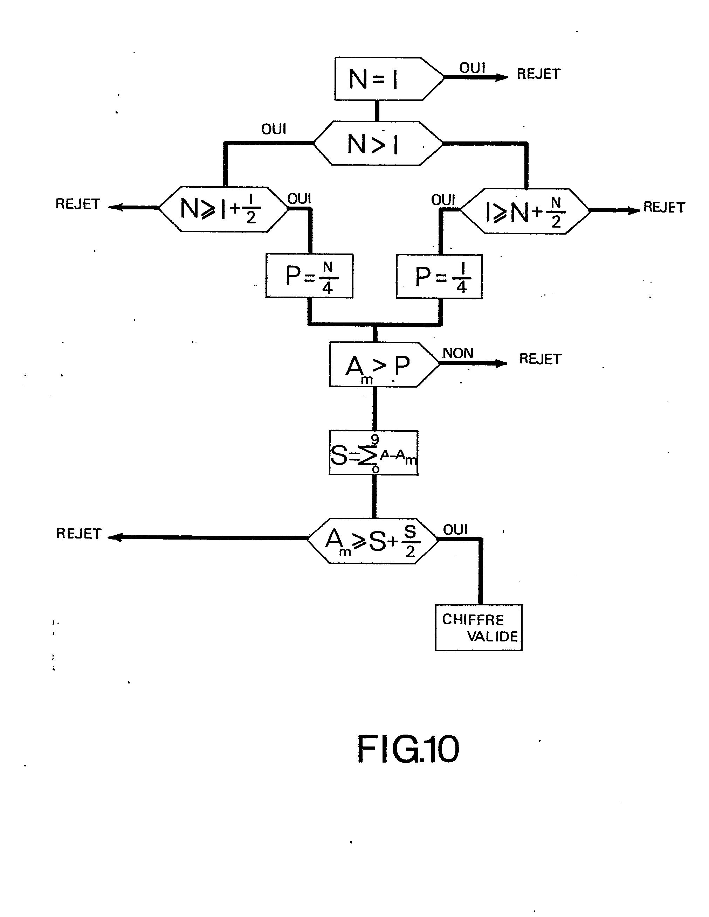

Chaque zone de chiffre de la mémoire 91, Fig. 9, comprend dix compteurs qui enregistrent, pour chaque chiffre de 0 à 9, le nombre de fois $A_x$ qu'il a été trouvé. Le microprocesseur 43 comprend encore un compteur 92 de lectures d'étiquette dans le sens normal et un compteur 93 de lectures d'étiquette dans le sens inverse. Comme l'indique l'organigramme du microprocesseur 43 représenté à la Fig. 10, les nombres N cumulés dans 92 et S cumulés dans 93 sont comparés. Si N est supérieur à 1,5 I, on considère que l'étiquette est lue dans le sens normal; si I est supérieur à 1,5 N, on considère qu'elle est lue dans le sens inverse; et, si aucune de ces conditions n'est remplie, la lecture de l'étiquette est rejetée.

Si on suppose que, sur 100 lectures, on a N = 80 et I = 20, la première condition ci-dessus est remplie. On va alors considérer la zone du premier chiffre dans la mémoire 91 et on suppose que l'on a les fréquences suivantes pour les chiffres:

| | |
|---|---|
| "0" | 0 |
| "1" | 1 |
| "2" | 0 |
| "3" | 5 |
| "4" | 2 |
| "5" | 0 |

| "6" | 64 |
| "7" | 12 |
| "8" | 9 |
| "9" | 7 |

La fréquence maximale est de 64 pour le chiffre "6". La somme S des fréquences des autres chiffres est égale à 36. La fréquence $A_6$ est supérieure à N/4 = 20 et supérieure à 1,5 S = 54. Donc, le microprocesseur considère que le premier chiffre est un "6". Si la condition "$A_x$ supérieure à N/4" où $A_x$ est la fréquence maximale, et si la condition "$A_x$ supérieur à 1,5 S", où S est la somme des fréquences des autres chiffres, ne sont pas remplies, la lecture de l'étiquette est rejetée.

Les autres zones de chiffres de la mémoire 91 sont traitées de la même manière.

Dans l'exemple ci-dessus où on avait choisi N+I = 100, on avait également $A_6$ + S = 100, mais en pratique cette somme est plus souvent inférieure qu'égale à N+I. En effet le code "deux parmi cinq" n'est pas respecté pour certains chiffres alors que les critères d'incrémentation de N ou I ont été vérifié. Dans l'organigramme de la Fig. 10, $A_m$ désigne le chiffre de fréquence la plus grande et P le quart de N ou de I, selon le choix du sens de lecture.

On notera que le programme de traitement du microprocesseur comprend deux phases bien distinctes. Tout d'abord, à la disparition de FA, on a une phase d'acquisition des chiffres contenus dans le registre 89. Puis, à la réception de FA, le traitement interne des contenus des mémoires. Bien entendu, le microprocesseur délivre le numéro de l'étiquette sur un periphérique de sortie classique.

REVENDICATIONS

1) Dispositif de lecture optique d'étiquettes (38) portant une pluralité de combinaisons codées de barres étroites et larges, l'étiquette (38) défilant devant un système optique (40) qui projette l'image de l'étiquette (38) sur une barrette d'éléments photosensibles (37), les images des barres étant sensiblement perpendiculaires à la barrette, la barrette étant lue longitudinalement à la fréquence d'une horloge de lecture (LEC) et délivrant un signal analogique (SL) d'un niveau haut quand un élément photosensible, en cours de lecture, est illuminé par l'image d'une barre et d'un niveau bas dans le cas contraire, caractérisé en ce qu'il comprend encore un circuit de reconnaissance de largeur de barre (41) qui reçoit le signal analogique (SL) et délivre un premier signal (ST) pour chaque barre lue et un second signal (SN) pour chaque barre large lue, un circuit d'interface (42) qui reçoit les premiers et seconds signaux (ST, SN), ainsi que les signaux d'horloge de lecture (LEC), le circuit d'interface (42) traitant les seconds signaux (SN) pour les grouper par combinaison, et un microprocesseur (43) commandant, après chaque lecture de la barrette (37), les transferts des combinaisons du circuit d'interface (42) dans ses mémoires, puis, à la fin du passage d'une étiquette (38), traitant le contenu de ses mémoires de chiffres pour délivrer le numéro de l'étiquette (38).

2) Dispositif suivant la revendication 1, caractérisé en ce que le circuit de reconnaissance de largeur de barre (41) comprend une horloge d'échantillonnage (44), une première porte ET (53) dont une entrée reçoit le signal analogique (SL), dont la seconde entrée est reliée à la sortie de l'horloge d'échantillonnage (44) et dont la sortie est reliée à l'entrée d'un premier compteur numérique (55), la sortie du premier compteur numérique (55) étant reliée à un convertisseur numérique-décimal (58) dont la sortie est reliée à l'entrée parallèle d'une première mémoire (61) à registre à décalage, une seconde porte ET (62) dont la première entrée est reçoit le signal d'horloge de lecture (LEC), dont la seconde entrée est reliée à la sortie de l'horloge d'échantillonnage (44) et dont la sortie est reliée à l'entrée de lecture série de la première mémoire (61), la sortie sérielle de données de la première mémoire (61) étant reliée à

17

0053550

un circuit logique (64, 65, 72) délivrant un signal à la seconde série de "1" lue dans ladite première mémoire (61), un second compteur numérique (67) dont l'entrée est reliée à la sortie de la seconde porte ET (62), un registre mémoire (66) dont les entrées de données sont reliées aux sorties dudit second compteur numérique (67) et dont l'entrée d'écriture est reliée à la sortie dudit circuit logique (64, 65, 72), un comparateur (59) dont les premières entrées sont reliées aux sorties du premier compteur numérique (55) et dont les secondes entrées sont reliées aux sorties dudit registre mémoire numérique (66), la sortie du comparateur délivrant un signal quand la valeur numérique appliquée à ses premières entrées est supérieure à la valeur numérique appliquée à ses secondes entrées et étant reliée à la première entrée d'une porte de sortie ET (71) dont la seconde entrée est reliée à une première bascule (69) délivrant le second signal à chaque passage niveau haut à niveau bas du signal analogique (SL), une seconde bascule délivrant le premier signal à chaque passage niveau haut à niveau bas du signal analogique (SL), un détecteur de passage niveau haut à niveau bas dont la sortie est reliée aux entrées de remise à zéro des premier et second compteurs numériques (55, 67).

3) Dispositif suivant la revendication 2, caractérisé en ce que le circuit d'interface (42) comprend un premier registre à décalage (73) dont l'entrée d'horloge est reliée à la sortie d'une première porte OU (74) dont une entrée reçoit le premier signal (ST) et dont la seconde entrée est reliée à la sortie d'une horloge de transfert (76), l'entrée de données dudit premier registre à décalage (73) recevant le second signal (SN), un second registre à décalage (89) dont l'entrée d'horloge est reliée à la sortie d'une seconde porte OU (90) dont la première entrée est reliée à la sortie de l'horloge de transfert (76) et dont la seconde entrée reçoit un signal de commande de transfert (CLMU) du microprocesseur (43), un circuit de test (77) du nombre des données inscrites dans le premier registre à décalage (73) dont une sortie est reliée à l'entrée d'autorisation de transfert du microprocesseur (43), la sortie de données du second registre à décalage (89) étant reliée à l'entrée de données (INFOS) du microprocesseur (43), l'entrée de remise à zéro du premier registre (73) à décalage recevant le signal d'horloge de lecture (LEC).

0053550

4) Dispositif suivant la revendication 3, destiné à lire des étiquettes comportant des codes de début et de fin d'étiquette, caractérisé en ce que le circuit de test (77) a $x$ premières entrées respectivement reliées aux sorties des $x$ cellules du premier registre à décalage (73) destinées à contenir le code de début et $y$ entrées reliées aux sorties des $y$ cellules du premier registre à décalage (73) destinées à contenir le code de fin d'étiquette, lesdites $x$ et $y$ entrées étant reliées aux premières entrées d'un second comparateur (77) dont les secondes entrées sont reliées à des sorties de mémoires (78, 79) contenant lesdits codes de début et de fin, la sortie du comparateur (77) étant reliée à ladite entrée d'autorisation de transfert du microprocesseur (43) et, par l'intermédiaire d'un inverseur (85), à la première entrée d'une porte ET (75) dont la seconde entrée reçoit le premier signal (ST) et dont la sortie est reliée à la première entrée de la première porte OU (74).

1 2 3 4 5 6 7 8 9 10 11 12 13 14 15 16 17 18 19 20 21 22 23 24 25 26 27 28 29 30 31 32 33 34 35 36

Début  6  4  1  0  5  9  Fin

$\vec{F_1}$

## FIG.1

## FIG.2

## FIG.3

FIG.4

FIG.6

SL a

Entree de 55 b

ST c

SN d

H

0053550

FIG.5

SD →

SI →

FA →

CLMU →

INFOS ←

91

N 92

I 93

43

FIG.9

18
17
16  S

9
8
7

FIG.7

0053550

FIG.8

$N = I$ — OUI → REJET

$N > I$

OUI (left) / (right)

$N \geqslant I + \dfrac{1}{2}$ — OUI → REJET (left)

$I \geqslant N + \dfrac{N}{2}$ — OUI → REJET (right)

$P = \dfrac{N}{4}$

$P = \dfrac{I}{4}$

$A_m > P$ — NON → REJET

$S = \sum_{o}^{9} A - A_m$

$A_m \geqslant S + \dfrac{S}{2}$ — REJET (left) / OUI (right)

CHIFFRE VALIDE

**FIG.10**

0053550

Numéro de la demande

EP 81 40 1872

**Office européen des brevets**

**RAPPORT DE RECHERCHE EUROPEENNE**

| CLASSEMENT DE LA DEMANDE (Int. Cl. 3) |
|---|
| G 06 K 7/016 |
| G 06 K 7/14 |

## DOCUMENTS CONSIDERES COMME PERTINENTS

| Catégorie | Citation du document avec indication, en cas de besoin, des parties pertinentes | Revendication concernée |
|---|---|---|
| Y | <u>US - A - 4 147 295</u> (NOJIRI e.a.) | |
| | * Figures 1-4; colonne 1, ligne 53 à colonne 7, ligne 51 * | 1,2 |
| | -- | |
| Y | <u>US - A - 4 146 782</u> (BARNICH) | |
| | * Colonne 3, ligne 56 à colonne 4, ligne 50; colonne 5, lignes 39-45 * | 1,2 |
| | -- | |
| Y | <u>US - A - 3 838 251</u> (HERRIN) | |
| | * Figure 1; colonne 2, ligne 24 à colonne 3, ligne 31; colonne 3, ligne 61 à colonne 4, ligne 10; colonne 5, ligne 14 à colonne 7, ligne 35 * | 3,4 |
| | -- | |
| Y | <u>US - A - 3 886 521</u> (DOBRAS) | |
| | * Figure 1; colonne 13, ligne 66 à colonne 15, ligne 44 * | 3,4 |
| | ---- | |

| DOMAINES TECHNIQUES RECHERCHES (Int. Cl. 3) |
|---|
| G 06 K 7/016 |
| 7/14 |
| 7/10 |

| CATEGORIE DES DOCUMENTS CITES |
|---|
| X: particulièrement pertinent à lui seul |
| Y: particulièrement pertinent en combinaison avec un autre document de la même catégorie |
| A: arrière-plan technologique |
| O: divulgation non-écrite |
| P: document intercalaire |
| T: théorie ou principe à la base de l'invention |
| E: document de brevet antérieur, mais publié à la date de dépôt ou après cette date |
| D: cité dans la demande |
| L: cité pour d'autres raisons |
| &: membre de la même famille, document correspondant |

Le présent rapport de recherche a été établi pour toutes les revendications

| Lieu de la recherche | Date d'achèvement de la recherche | Examinateur |
|---|---|---|
| La Haye | 04-03-1982 | FORLEN |

OEB Form 1503.1 06.78